# EUROPEAN PATENT APPLICATION

(11) **EP 2 858 431 A1**
(43) Date of publication of application: **08.04.2015**
(21) Application number: 13797242.8
(22) Date of filing: 24.04.2013
(51) Int. Cl.: H04W 52/02

(54) **STATE TRANSITION TIMER SETTING SYSTEM, MOBILE EQUIPMENT, MOBILE COMMUNICATION SYSTEM, AND STATE TRANSITION TIMER SETTING METHOD**

(30) Priority: 30.05.2012 JP 2012123184
(71) Applicant: NTT DOCOMO, INC., Chiyoda-ku Tokyo 100-6150 (JP)
(72) Inventor: KOMATSU Shinji, Tokyo 100-6150 (JP); GOTO Yoshikazu, Tokyo 100-6150 (JP)
(74) Representative: Viering, Jentschura & Partner Patent- und Rechtsanwälte
(86) International application number: PCT/JP2013/062051
(87) International publication number: WO 2013/179830

(57) **Abstract**

A state-transition-timer setting system includes: an acquiring unit that acquires prediction information on the amount of traffic of a mobile equipment; a timer determining unit that determines a state transition timer for a time after which a state of the mobile equipment is caused to transition from a communication state to a power-saving state, based on the prediction information; and a timer setting unit that sets the state transition timer for the mobile equipment. The state transition timer includes either one of a time from when data communication of the mobile equipment is completed to when a transition request command to request transition into the power-saving state is transmitted to the base station, or a shortest transmission interval at which the mobile equipment can transmit the transition request command subsequently to when the mobile equipment transmits the transition request command after completion of the data communication of the mobile equipment.

## Description

### Technical Field

The present invention relates to a state-transition-timer setting system, a mobile equipment, a mobile communication system, and a state-transition-timer setting method for setting a state transition timer for a time after which a state of the mobile equipment is caused to transition from a communication state to a power-saving state.

### Background Art

The section of 15.6 of Non-Patent Literature 1 describes Fast Dormancy that is a function designed to reduce power consumption of a mobile equipment such as a mobile phone.

### Citation List

### Non Patent Literature

[Non Patent Literature 1] Harri Holma, Antti Toskala, "WCDMA for UMTS: HSPA Evolution and LTE", John Wiley & Sons, Inc., 22 September 2010

### Summary of Invention

### Technical Problem

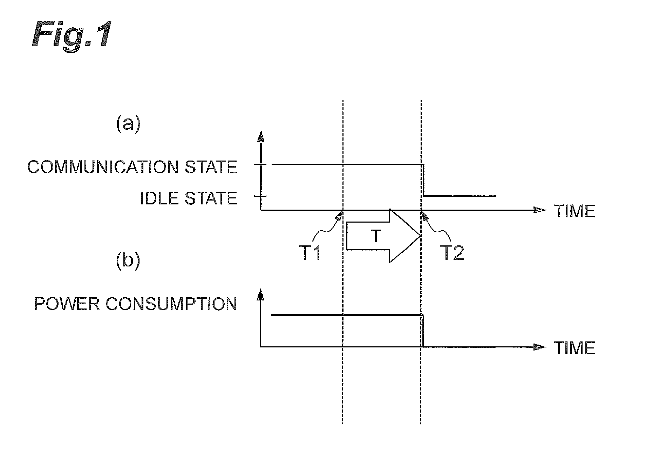

A mobile equipment to which the Fast Dormancy is applied causes a state of the mobile equipment to transition from a communication state to an idle state (power-saving state) after a timer (Fast Dormancy activation timer, referred to as "FD activation timer" hereinafter) for a certain time from completion of data communication elapses. Fig. 1 includes diagrams illustrating time-series transitions of the state and the power consumption in the mobile equipment. In Fig. 1, the time T1 indicates a point in time when data communication is completed in the mobile equipment, the time T2 indicates a point in time when the FD timer expires, and the period T between the time T1 and the time T2 indicates a period of time of the FD activation timer.

As depicted in Fig. 1A, the mobile equipment is initially in a communication state, and transitions from the communication state into an idle state at the time T2. As depicted in Fig. 1B illustrating the transition of power consumption of the mobile equipment on the same time series as in Fig. 1A, the power consumption of the mobile equipment that has transitioned into the idle state is lower than the power consumption of the mobile equipment being in the communication state.

In other words, when the FD activation timer is set to a shorter time, the mobile equipment transitions into the idle state sooner after completing the data communication, and thus the power consumption of the mobile equipment can be reduced. However, when the mobile equipment is required to resume data communication due to new transmission or retransmission after transitioning into the idle state, the mobile equipment needs to transition from the idle state into the communication state, and accordingly time delay in data communication may occur associated with this transition.

In contrast, when the FD activation timer is set to a longer time, the mobile equipment maintains the communication state for a longer period of time after completing the data communication. When resumption of the data communication is required between the time T1 and the time T2 in Fig. 1, for example, due to new transmission or retransmission, the mobile equipment still remains to be in the communication state, and accordingly time delay in data communication does not occur associated with additional state transition and the connection time can be shortened. However, because the mobile equipment maintains the communication state for the longer period of time after completing the data communication, the power consumption of the mobile equipment cannot be significantly reduced. Thus, when the FD activation timer is set, a timer value needs to be set in consideration of the above-described trade-off.

The frequency of using communication in a mobile equipment is generally assumed to depend on a user or a situation, but no methods have been conventionally available for setting the FD activation timer that is suitable for all patterns. For example, in a case that the FD activation timer is shorter, when a mobile equipment frequently performs communication, delay problematically occurs every time the mobile equipment performs communication due to the transition from the idle state to the communication state. In addition, occurrence of traffic for the transition between a base station and a mobile equipment problematically puts a load on the network. In contrast, for example, in a case that the FD activation timer is longer, when time is left between the occurrence of traffic and the next communication is performed, an unnecessarily larger amount of electric power is problematically consumed during a period until the Fast Dormancy is activated.

The present invention has been made in view of such problems, and aims to provide a state-transition-timer setting system, a mobile equipment, a mobile communication system, and a state-transition-timer setting method that enable more efficient reduction of power consumption of the mobile equipment.

### Solution to Problem

To solve the above-described problems, a state-transition-timer setting system according to one aspect of the present invention includes acquiring means for acquiring prediction information on the amount of traffic of a mobile equipment; timer determining means for determining a state transition timer for a time after which a state of the mobile equipment is caused to transition from a communication state to a power-saving state, based on the prediction information acquired by the acquiring means; and timer setting means for setting the state transition timer determined by the timer determining means for the mobile equipment.

A mobile equipment according to one aspect of the present invention includes acquiring means for acquiring prediction information on the amount of traffic of the mobile equipment; timer determining means for determining a state transition timer for a time after which a state of the mobile equipment is caused to transition from a communication state to a power-saving state, based on the prediction information acquired by the acquiring means; and timer setting means for setting the state transition timer determined by the timer determining means for the mobile equipment.

A mobile communication system according to one aspect of the present invention is a mobile communication system that includes a base station; and a mobile equipment. The base station includes acquiring means for acquiring prediction information on the amount of traffic of the mobile equipment; timer determining means for determining a state transition timer for a time after which a state of the mobile equipment is caused to transition from a communication state to a power-saving state, based on the prediction information acquired by the acquiring means; and transmitting means for transmitting the state transition timer determined by the timer determining means to the mobile equipment. The mobile equipment includes receiving means for receiving the state transition timer from the base station; and timer setting means for setting the state transition timer received by the receiving means for the mobile equipment.

A state-transition-timer setting method according to one aspect of the present invention is a state-transition-timer setting method that is performed by a state-transition-timer setting system. The state-transition-timer setting method includes an acquiring step of, by acquiring means of the state-transition-timer setting system, acquiring prediction information on the amount of traffic of a mobile equipment; a timer determining step of, by timer determining means of the state-transition-timer setting system, determining a state transition timer for a time after which a state of the mobile equipment is caused to transition from a communication state to a power-saving state, based on the prediction information acquired at the acquiring step; and a timer setting step of, by timer setting means of the state-transition-timer setting system, setting the state transition timer determined at the timer determining step for the mobile equipment.

By the state-transition-timer setting system, the mobile equipment, the mobile communication system, and the state-transition-timer setting method described above, based on the prediction information on the amount of traffic of the mobile equipment acquired by the acquiring means, the state transition timer is determined by the timer determining means. The state transition timer thus determined is set for the mobile equipment by the timer setting means. With this configuration, based on the prediction information on the amount of traffic of the mobile equipment, the state transition timer can be dynamically determined and set. For example, when the prediction information indicates that the amount of traffic of the mobile equipment will increase, by setting the state transition timer to be longer and thus maintaining the mobile equipment to be in the communication state for a longer period of time after completion of data communication, time delay in data communication associated with additional state transition can be prevented from occurring at the time of resumption of data communication, whereby the connection time can be shortened. Furthermore, this can reduce the occurrence of traffic for transition between the base station and the mobile equipment, thereby reducing the load on the network. In addition, for example, when the prediction information indicates that the amount of traffic of the mobile equipment will decrease, by setting the state transition timer to be shorter for the mobile equipment to transition into the power-saving state sooner after the completion of data communication, the power consumption of the mobile equipment can be reduced. In this manner, it is possible to reduce the power consumption of the mobile equipment more efficiently while reducing the influence on the data communication.

In the state-transition-timer setting system, the mobile equipment, and the mobile communication system according to one aspect of the present invention, the prediction information may be past traffic amount that is the amount of traffic during a certain period of time in the past for the mobile equipment. The timer determining means may determine the state transition timer to be a longer time than a predetermined set time when the past traffic amount acquired by the acquiring means is larger than a predetermined threshold, and may determine the state transition timer to be a shorter time than the predetermined set time when the past traffic amount acquired by the acquiring means is smaller than the predetermined threshold. With this configuration, based on the past traffic amount, the state transition timer can be dynamically determined and set. For example, when the past traffic amount is larger than the predetermined threshold, the amount of upcoming traffic of the mobile equipment is predicted to be large, and accordingly by setting the state transition timer to be longer and thus maintaining the mobile equipment to be in the communication state for a longer period of time after completion of data communication, time delay in data communication associated with additional state transition can be prevented at the time of resumption of data communication, whereby the connection time can be shortened. Furthermore, this can reduce the occurrence of traffic for transition between the base station and the mobile equipment, thereby reducing the load on the network. In addition, for example, when the past traffic amount is smaller than the predetermined threshold, the amount of upcoming traffic of the mobile equipment can be predicted to be small, and accordingly by setting the state transition timer to be shorter for the mobile equipment to transition into the power-saving state sooner after the completion of data communication, the power consumption of the mobile equipment can be reduced. In this manner, it is possible to reduce the power consumption of the mobile equipment more efficiently while reducing the influence on the data communication.

In the state-transition-timer setting system, the mobile equipment, and the mobile communication system according to one aspect of the present invention, the prediction information may be activation information indicating whether a certain application involving communication is running in the mobile equipment. The timer determining means may determine the state transition timer to be a longer time than a predetermined set time when the activation information acquired by the acquiring means indicates that the application is running, and may determine the state transition timer to be a shorter time than the predetermined set time when the activation information acquired by the acquiring means indicates that the application is not running. With this configuration, based on the activation information, the state transition timer can be dynamically determined and set. For example, when the activation information indicates that the application is running, the amount of upcoming traffic of the mobile equipment can be predicted to be large, and accordingly by setting the state transition timer to be longer and thus maintaining the mobile equipment to be in the communication state for a longer period of time after completion of data communication, time delay in data communication associated with additional state transition can be prevented at the time of resumption of data communication, whereby the connection time can be shortened. Furthermore, this can reduce the occurrence of traffic for transition between the base station and the mobile equipment, thereby reducing the load on the network. In addition, for example, when the activation information indicates that the application is not running, the amount of upcoming traffic of the mobile equipment is predicted to be small, and accordingly by setting the state transition timer to be shorter for the mobile equipment to transition into the power-saving state sooner after the completion of data communication, the power consumption of the mobile equipment can be reduced. In this manner, it is possible to reduce the power consumption of the mobile equipment more efficiently while reducing the influence on the data communication.

In the state-transition-timer setting system, the mobile equipment, and the mobile communication system according to one aspect of the present invention, the state transition timer may be a time from when data communication of the mobile equipment is completed to when a transition request command to request transition into the power-saving state is transmitted to the base station, or may be a shortest transmission interval at which the mobile equipment is capable of transmitting the transition request command subsequently to when the mobile equipment transmits the transition request command after completion of data communication of the mobile equipment. By specifying the state transition timer in this manner, the time after which the state of the mobile equipment is caused to transition from the communication state to the power-saving state can be controlled more accurately, whereby the power consumption of the mobile equipment can be reduced more efficiently.

### Advantageous Effects of Invention

The power consumption of a mobile equipment can be reduced more efficiently.

### Brief Description of Drawings

[Fig. 1] Fig. 1 includes diagrams illustrating time-series transitions of the state and the power consumption in a mobile equipment to which Fast Dormancy is applied.
[Fig. 2] Fig. 2 is a schematic diagram of a mobile communication system according to the embodiments of the present invention.
[Fig. 3] Fig. 3 is a functional block diagram illustrating a configuration of a mobile equipment according to a first embodiment of the present invention.
[Fig. 4] Fig. 4 is a diagram illustrating a hardware configuration of the mobile equipment according to the embodiments of the present invention.
[Fig. 5] Fig. 5 is a diagram illustrating a hardware configuration of a base station according to the embodiments of the present invention.
[Fig. 6] Fig. 6 is a diagram illustrating an example of state transition of the base station and the mobile equipment according to the embodiments of the present invention.
[Fig. 7] Fig. 7 is another example of the state transition of the base station and the mobile equipment according to the embodiments of the present invention.
[Fig. 8] Fig. 8 includes table examples of state-transition-timer determination tables according to the first embodiment of the present invention.
[Fig. 9] Fig. 9 includes other table examples of the state-transition-timer determination table according to the first embodiment of the present invention.
[Fig. 10] Fig. 10 is a sequence diagram illustrating processes of a state-transition-timer setting method performed in the mobile equipment according to the first embodiment of the present invention.
[Fig. 11] Fig. 11 is a functional block diagram illustrating a configuration of a mobile equipment according to a second embodiment of the present invention.
[Fig. 12] Fig. 12 includes table examples of state-transition-timer determination tables according to the second embodiment of the present invention.
[Fig. 13] Fig. 13 is a sequence diagram illustrating processes of a state-transition-timer setting method performed in the mobile equipment according to the second embodiment of the present invention.
[Fig. 14] Fig. 14 is a functional block diagram illustrating a configuration of a base station and a mobile equipment according to a third embodiment of the present invention.
[Fig. 15] Fig. 15 is a sequence diagram illustrating processes of a state-transition-timer setting method performed in the base station and the mobile equipment according to the third embodiment of the present invention.

### Description of Embodiments

Embodiments of a state-transition-timer setting system, a mobile equipment, a mobile communication system, and a state-transition-timer setting method will be described in detail hereinafter with reference to the drawings. In the drawings, like reference signs are given to like elements, and duplicated explanations are omitted.

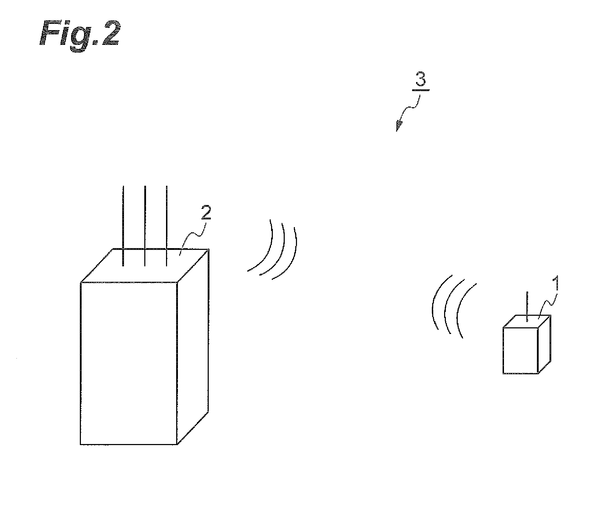

Fig. 2 is a schematic diagram of a mobile communication system 3 including a base station 2 and a mobile equipment 1 according to the present embodiments. As depicted in Fig. 2, the mobile communication system 3 includes the base station 2 and the mobile equipment 1. The numbers of base stations 2 and mobile equipments 1 included in the mobile communication system 3 depicted in Fig. 2 each are one, but are not limited to this, and the base station 2 and the mobile equipment 1 each may be provided in plurality. The base station 2 and the mobile equipment 1 can wirelessly communicate with each other in mobile communication.

The mobile communication system 3, the base station 2, and the mobile equipment 1 specifically correspond to the Universal Mobile Telecommunications System (UMTS), the Base Transceiver Station (BTS), and the User Equipment (UE), respectively, in the 3rd Generation Partnership Project (3GPP) standard. The base station 2 may be the Radio Network Controller (RNC) that is a radio control station in the 3GPP standard, or may be a device that has functions of both the BTS and the RNC. The mobile communication system 3, the base station 2, and the mobile equipment 1 also correspond to the Evolved Packet System (EPS), the Evolved Node B (eNodeB), and the UE, respectively, in the 3GPP standard.

### [First Embodiment]

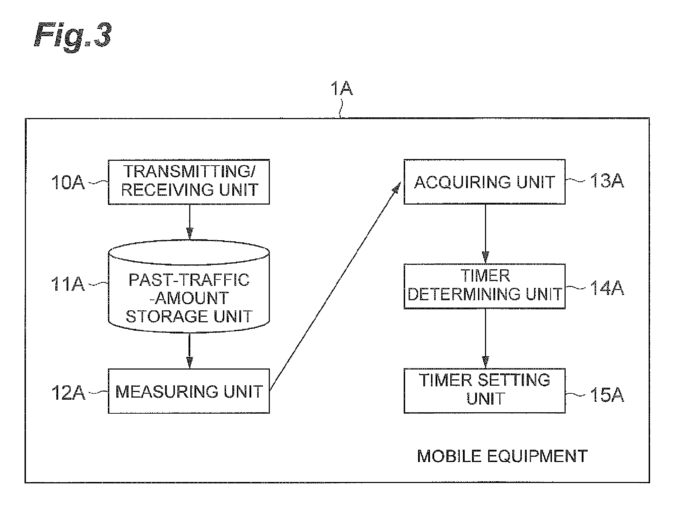

Fig. 3 is a functional block diagram illustrating a configuration of a mobile equipment 1A according to a first embodiment. As depicted in Fig. 3, the mobile equipment 1A includes a transmitting/receiving unit 10A, a past-traffic-amount storage unit 11A, a measuring unit 12A, an acquiring unit 13A (acquiring means), a timer determining unit 14A (timer determining means), and a timer setting unit 15A (timer setting means). The acquiring unit 13A, the timer determining unit 14A, and the timer setting unit 15A are also components of the status-transition-timer setting system (not depicted). In other words, part of the respective functional blocks constituting the state-transition-timer setting system is included by the mobile equipment 1A, and the other part is included by another device (e.g., base station 2).

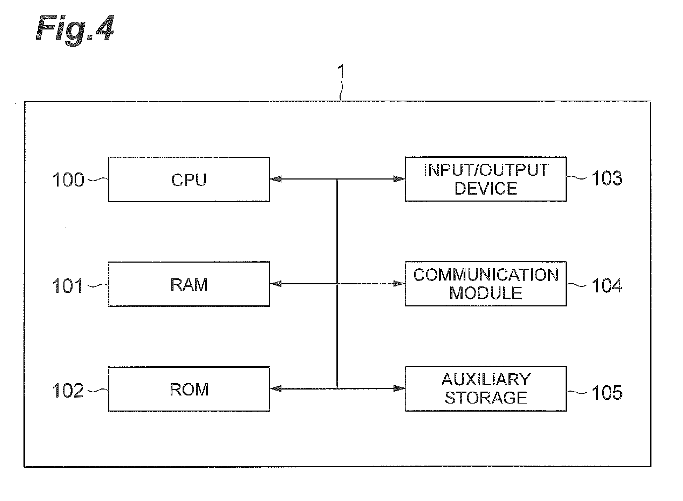

The mobile equipment 1A is constructed of hardware such as a CPU. Fig. 4 is a diagram illustrating one example of a hardware configuration of the mobile equipment 1. The mobile equipment 1A depicted in Fig. 3 is physically configured as a computer system that includes a CPU 100, a RAM 101 and a ROM 102 being main memories, an input/output device 103 such as a numeric keypad or a display, a communication module 104, and an auxiliary storage 105 as depicted in Fig. 4.

Functions of the respective functional blocks of the mobile equipment 1A depicted in Fig. 3 are implemented by loading predetermined computer software into hardware such as the CPU 100 and the RAM 101 depicted in Fig. 4 to operate the input/output device 103, the communication module 104, and the auxiliary storage 105 under control of the CPU 100, and also by reading and writing data from and into the RAM 101.

It should be noted that a mobile equipment 1B and a mobile equipment 1C described in the following embodiments each are also configured as a computer system that is similar to the mobile equipment 1A. In the present embodiment, mobile equipments of the respective embodiments are collectively called the mobile equipment 1.

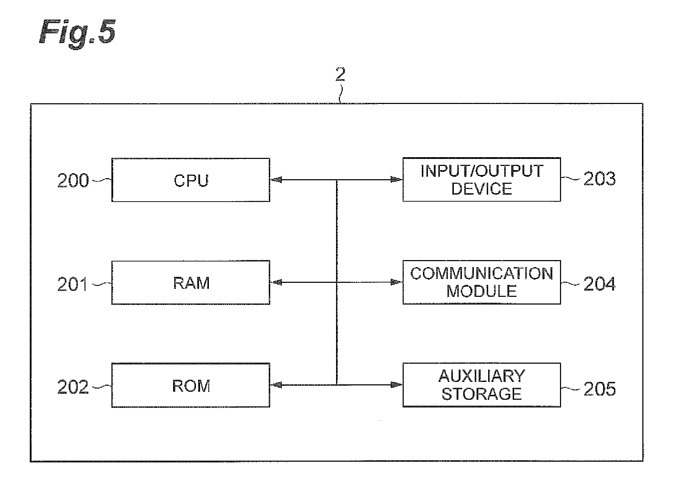

Fig. 5 is a diagram illustrating one example of a hardware configuration of the base station 2. The base station 2 depicted in Fig. 2 is physically configured as a computer system that includes a CPU 200, a RAM 201 and a ROM 202 being main memories, an input/output device 203 such as a numeric keypad or a display, a communication module 204, and an auxiliary storage 205 as depicted in Fig. 5.

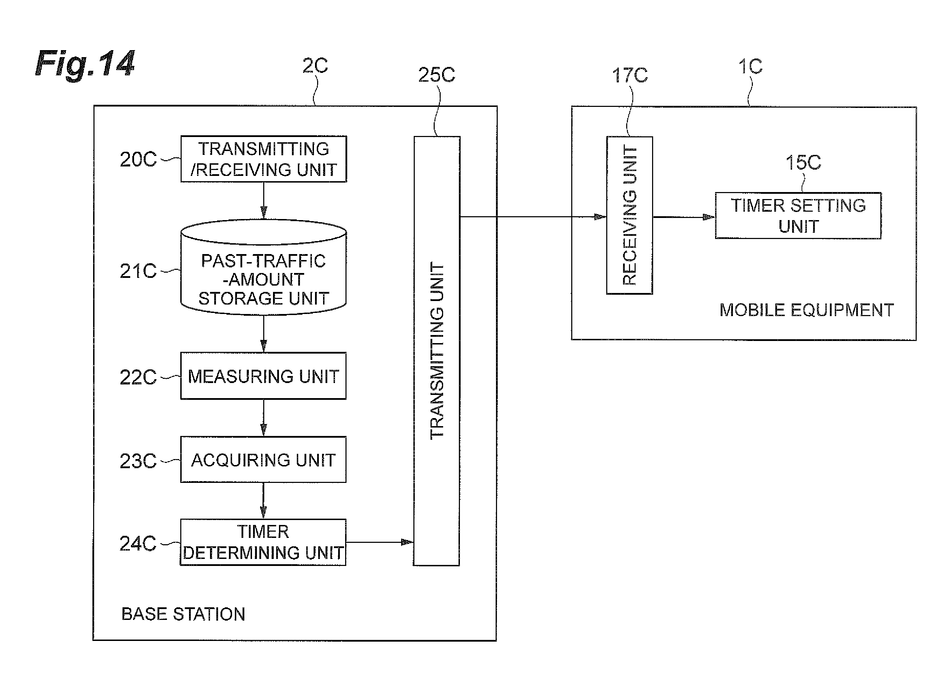

Functions of the respective functional blocks of a base station 2C illustrated in Fig. 14 described later are implemented by loading predetermined computer software into hardware such as the CPU 200 and the RAM 201 depicted in Fig. 5 to operate the input/output device 203, the communication module 204, and the auxiliary storage 205 under control of the CPU 200, and also by reading and writing data from and into the RAM 201. In the present embodiments, base stations of the respective embodiments are collectively called the base station 2.

The following describes the respective functional blocks of the mobile equipment 1A (or the state-transition-timer setting system) depicted in Fig. 3.

The transmitting/receiving unit 10A transmits and receives data between the mobile equipment 1A and another device such as the base station 2. The past-traffic-amount storage unit 11A measures the amount of traffic (amount of data communication) transmitted and received by the transmitting/receiving unit 10A, and stores the data in the auxiliary storage 105, for example.

The measuring unit 12A creates prediction information on the amount of upcoming traffic of the mobile equipment 1A. Specifically, the measuring unit 12A measures past traffic amount that is the amount of traffic in the mobile equipment 1A during a certain period in the past to create a measurement result (past traffic amount) on the basis of the amount of traffic of the mobile equipment 1A that is stored by the past-traffic-amount storage unit 11A. Examples of the past traffic amount measured by the measuring unit 12A include the amount of traffic during the past 10 seconds, the amount of traffic during the past 30 seconds, and the amount of traffic during the past 60 seconds. The measuring unit 12A may cause the past-traffic-amount storage unit 11A to store therein the past traffic amount thus created.

The acquiring unit 13A acquires prediction information on the amount of upcoming traffic of the mobile equipment 1A. Specifically, the acquiring unit 13A acquires the past traffic amount measured by the measuring unit 12A from the past-traffic-amount storage unit 11A or the measuring unit 12A. The acquiring unit 13A may acquire the past traffic amount (prediction information) from an external device via a network.

The timer determining unit 14A determines a state transition timer for a time after which the state of the mobile equipment 1A is caused to transition from a communication state to a power-saving state on the basis of the prediction information acquired by the acquiring unit 13A. Specifically, the timer determining unit 14A determines the state transition timer to be a longer time than a predetermined set time when the past traffic amount acquired by the acquiring unit 13A is larger than a predetermined threshold, and determines the state transition timer to be a shorter time when the past traffic amount acquired by the acquiring unit 13A is smaller than the predetermined threshold.

A specific example of the power-saving status (idle status) will be herein described. In the 3 GPP standard, as the Radio Resource Control (RRC) state transitions, the RRC Connected Mode and the RRC Idle Mode are specified, and further in the RRC Connected Mode, the CELL_Dedicated Channel (DCH) state, the CELL_Forward Access Channel (FACH) state, the Cell Paging Channel (CELL_PCH) state, and the URA Paging Channel (URA_PCH) state are specified. The power-saving state in the present embodiments is any one or more states of the RRC Idle Mode, the CELL_FACH state, the CELL_PCH state, and the URA_PCH state.

The CELL_PCH state herein is a state in which no dedicated channel is assigned to the UE, the UE intermittently receives the Paging Channel via the Paging Indication Channel (PICH) in the Downlink and has no channel for the Uplink. Note that the UMTS Terrestrial Radio Access Network (UTRAN) knows the position of the UE on cell level.

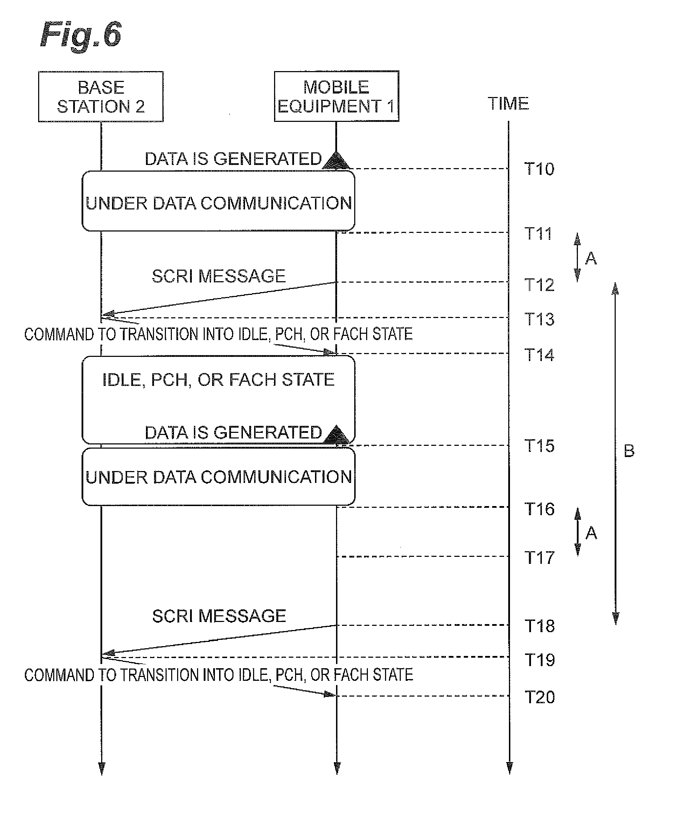

Subsequently, a specific example of the state transition timer will be described with reference to Fig. 6. Fig. 6 is a diagram illustrating an example of state transition of the mobile equipment 1 and the base station 2 on the time series. To begin with, communication data is generated in the mobile equipment 1 at time T10, and accordingly the mobile equipment 1 and the base station 2 transition into the communication state and the data is communicated between the mobile equipment 1 and the base station 2. This data communication is then completed at time T11, an FD activation timer that is a timer for a certain time (period of time indicated by the arrow A) is activated after the completion of the data communication, and the FD activation timer expires at time T12. Then, the mobile equipment 1 transmits a Signaling Channel Release Indication (SCRI) message that is a radio release request to the base station 2 at time T12, and in response to this, the base station 2 transmits a command to transition into the power-saving state to the mobile equipment 1 at time T13, and the mobile equipment 1 receives this transition command at time T14. As for the SCRI, see Section 8.1.14 in the following reference literature 1, for example.

### [Reference Literature 1: 3GPP TS 25.331 V11.0.0 (201M2)]

The mobile equipment 1 and the base station 2 then transition from the communication state into the power-saving state at time T14. Next, communication data is generated again in the mobile equipment 1 at time T15, and accordingly the mobile equipment 1 and the base station 2 transition into the communication state and the data is communicated between the mobile equipment 1 and the base station 2. This data communication is completed at time T16, and the point in time when the FD activation timer expires from the time T16 is assumed to be time T17.

It is assumed herein that the mobile equipment 1 is a T323 timer that is a shortest transmission interval of the SCRI from the base station 2 is set for the mobile equipment 1. The T323 timer, specified in the 3GPP, is the minimum value of an interval between two SCRI messages that the mobile equipment 1 is allowed to transmit. In Fig. 6, when the period (arrow B) between the time T12 and time T18 is set to be the T323 timer, the mobile equipment 1 cannot transmit an SCRI message during the period between the time T12 and the time T18. Subsequently, the mobile equipment 1 transmits the SCRI message to the base station 2 at the time T18, and in response to this, the base station 2 transmits a command to transition into the power-saving state to the mobile equipment 1 at time T19, and the mobile equipment 1 receives this transition command at time T20.

The state transition timer includes either one of a time from when data communication of the mobile equipment 1 is completed to when a transition request command to request transition into the power-saving state is transmitted to the base station 2, or a shortest transmission interval at which the mobile equipment 1 can transmit the transition request command subsequently to when the mobile equipment 1 transmits the transition request command after completion of the data communication of the mobile equipment 1. In other words, the state transition timer includes either one of the FD activation timer (period indicated by the arrow A in Fig. 6) or the T323 timer (period indicated by the arrow B in Fig. 6). Similarly to the period T depicted in Fig. 1, the period from the time T11 when the data communication is completed to the time T14 when the mobile equipment 1 transitions into the power-saving state in Fig. 6 may be the FD activation timer.

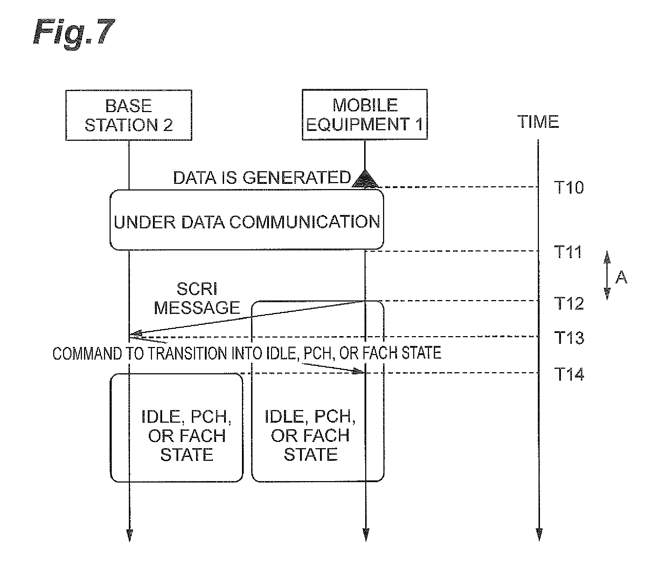

It has been described in Fig. 6 that the mobile equipment 1 transitions from the communication state into the power-saving state at the time T14 when receiving the command to transition into the power-saving state from the base station 2, but it is not limited to this. Fig. 7 is a diagram illustrating another example of the state transition of the mobile equipment 1 and the base station 2 on the time series. As depicted in Fig. 7, the mobile equipment 1 may transition from the communication state into the power-saving state at the time T12 when transmitting the SCRI message.

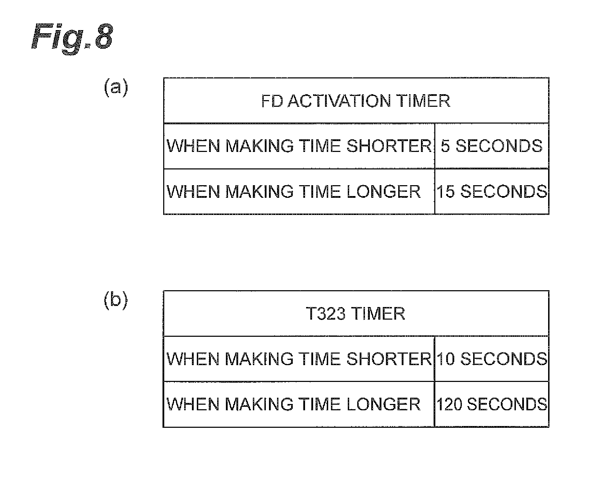

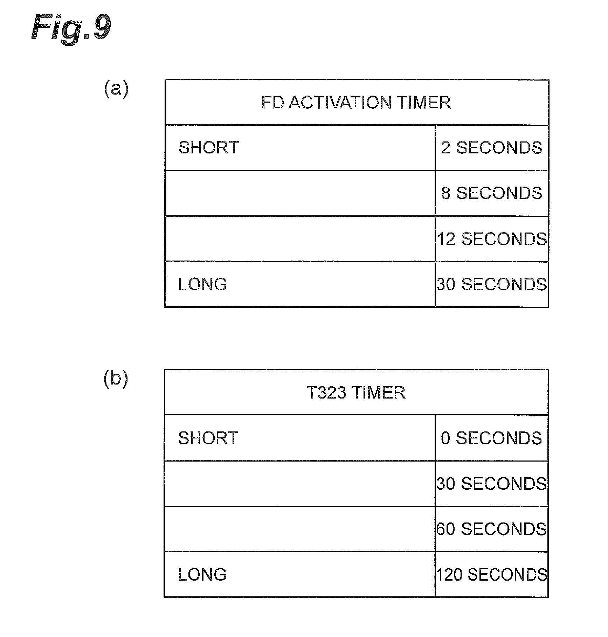

The following describes specific processes by which the timer determining unit 14A determines the state transition timer on the basis of the past traffic amount with reference to Figs. 8 and 9. Specific examples of the "predetermined threshold" to which the timer determining unit 14A compares the past traffic amount include "0 MB of data communication occurring during the past 60 seconds", "10 KB of data communication occurring during the past 60 seconds", and "5 MB of data communication occurring during the past 10 seconds". Specific examples of the "predetermined set time" include a default value (e.g., 10 seconds) of the FD activation timer when the state transition timer is the FD activation timer, and a default value (e.g., 60 seconds) of the T323 timer when the state transition timer is the T323 timer. Figs. 8A and 8B each are diagrams illustrating table examples of state-transition-timer determination tables to which the timer determining unit 14A refers when determining the state transition timer. Fig. 8A illustrates a state-transition-timer determination table when the state transition timer is the FD activation timer, and Fig. 8B illustrates a state-transition-timer determination table when the state transition timer is the T323 timer. As depicted in Fig. 8, times to which the timer determining unit 14A refers when determining the time for the state transition timer are stored in the state-transition-timer determination tables.

For example, assuming that the predetermined threshold is "0 MB of data communication occurring during the past 60 seconds (communication has not occurred during the past 60 seconds)" and the state transition timer is the FD activation timer, when the past traffic amount is "5 MB of data communication occurring during the past 60 seconds", the past traffic amount is larger than the predetermined threshold, and thus the timer determining unit 14A refers to the state-transition-timer determination table of Fig. 8A and determines the FD activation timer to be "15 seconds" that is a longer time than the predetermined set time.

Alternatively, assuming that the predetermined threshold is "5 MB of data communication occurring during the past 10 seconds" and the state transition timer is the T323 timer, when the past traffic amount is "1 MB of data communication occurring during the past 10 seconds", the past traffic amount is smaller than the predetermined threshold, and thus the timer determining unit 14A refers to the state-transition-timer determination table of Fig. 8B and determines the T323 timer to be "10 seconds" that is a shorter time than the predetermined set time.

As another example, when the past traffic amount acquired by the acquiring unit 13A indicates that communication has consecutively occurred at an interval within three seconds, for example, during the past 30 seconds, the timer determining unit 14A may determines the state transition timer to be a shorter time than the predetermined set time. When the past traffic amount indicates that communication has not consecutively occurred, the timer determining unit 14A may determines the state transition timer to be a longer time than the predetermined set time.

Fig. 9 includes diagrams illustrating other table examples of the state-transition-timer determination tables. A two-stage structure of times to which the timer determining unit 14A refers is illustrated in Fig. 8, and a multiple-stage structure is illustrated in Fig. 9. Similarly to Fig. 8, Fig. 9A illustrates a state-transition-timer determination table when the state transition timer is the FD activation timer, and Fig. 9B illustrates a state-transition-timer determination table when the state transition timer is the T323 timer. In the multiple-stage structure in Fig. 9, a range of a predetermined threshold and a time are associated with each other for each stage. For example, in Fig. 9A, the range of a predetermined threshold "equal to or larger than 0 MB and smaller than 1 MB in data communication occurring during the past 60 seconds" and the time of "2 seconds", the range of a predetermined threshold "equal to or larger than 1 MB and smaller than 2 MB in data communication occurring during the past 60 seconds" and the time of "8 seconds", the range of a predetermined threshold "equal to or larger than 2 MB and smaller than 5 MB in data communication occurring during the past 60 seconds" and the time of "12 seconds", and the range of a predetermined threshold "equal to or larger than 5 MB in data communication occurring during the past 60 seconds" and the time of "30 seconds" are associated with each other. The timer determining unit 14A then determines a time associated with a predetermined threshold to which the past traffic amount acquired by the acquiring unit 13A corresponds as the state transition timer. For example, in the case of Fig. 9A described above, when the past traffic amount acquired by the acquiring unit 13A is "3 MB of data communication during the past 60 seconds", the timer determining unit 14A determines the FD activation timer to be "12 seconds" that corresponds to the range of the predetermined threshold "equal to or larger than 2 MB and smaller than 5 MB in data communication occurring during the past 60 seconds" in Fig. 9A.

Referring back to Fig. 3, the timer setting unit 15A sets (reflects, updates) the status transition timer determined by the timer determining unit 14A for the mobile equipment 1A. The status transition timer is set by the timer setting unit 15A, so that the status transition timer takes effect in the mobile equipment 1A. When the status transition timer takes effect in the mobile equipment 1A, the state of the mobile equipment 1A transitions from the communication state to the power-saving state on the basis of the state transition timer.

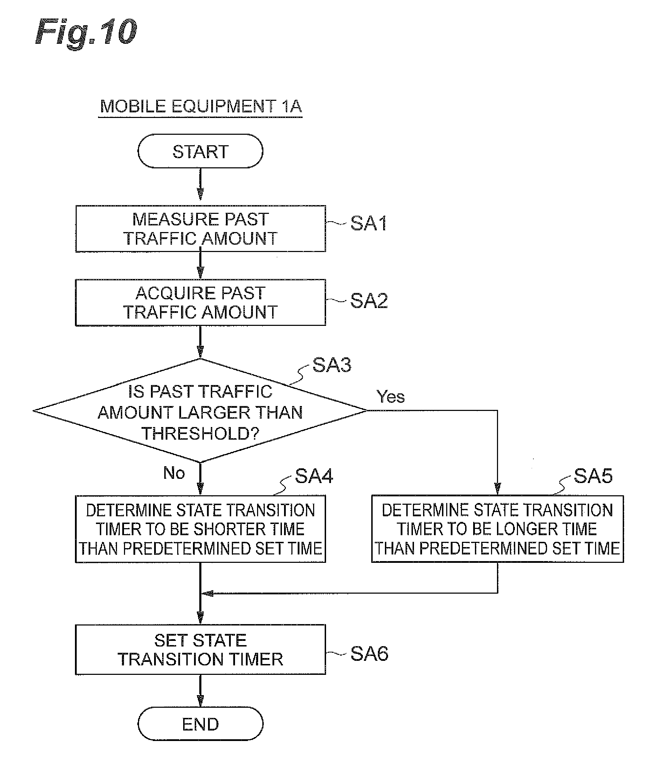

The following describes processes of the state-transition-timer setting method in the mobile equipment 1A (or the state-transition-timer setting system) according to the present embodiment with reference to Fig. 10.

To begin with, the measuring unit 12A measures the past traffic amount (step SA1), and the acquiring unit 13A acquires the past traffic amount thus measured (step SA2, acquiring step). Next, the timer determining unit 14A determines whether the past traffic amount is larger than the predetermined threshold (step SA3, timer determining step). If the past traffic amount is not determined to be larger at step SA3, the timer determining unit 14A determines the state transition timer to be a shorter time than the predetermined set time (step SA4, timer determining step). If the past traffic amount is determined to be larger at step SA3, the timer determining unit 14A determines the state transition timer to be a longer time than the predetermined set time (step SA5, timer determining step). Subsequently to step SA4 and step SA5, the timer setting unit 15A sets the state transition timer determined (step SA6, timer setting step).

The following describes functions and effects of the mobile equipment 1A (or the state-transition-timer setting system) configured as in the first embodiment.

With the mobile equipment 1A (or the state-transition-timer setting system) of the present embodiment, based on the prediction information on the amount of traffic of the mobile equipment 1A acquired by the acquiring unit 13A, the state transition timer is determined by the timer determining unit 14A. The state transition timer thus determined is set for the mobile equipment 1A by the timer setting unit 15A. With this configuration, based on the prediction information on the amount of traffic of the mobile equipment 1A, the state transition timer can be dynamically determined and set. For example, when the prediction information indicates that the amount of traffic of the mobile equipment 1A will increase, by setting the state transition timer to be longer and thus maintaining the mobile equipment 1A to be in the communication state for a longer period of time after completion of data communication, time delay in data communication associated with additional state transition can be prevented from occurring at the time of resumption of data communication without leaving ongoing Transmission Control Protocol (TCP) retransmission of data unfinished, whereby the connection time can be slaortened. Furthermore, this can reduce the occurrence of traffic for transition between the base station 2 and the mobile equipment 1A, thereby reducing the load on the network. In addition, for example, when the prediction information indicates that the amount of traffic of the mobile equipment 1A will decrease, by setting the state transition timer to be shorter for the mobile equipment 1A to transition into the power-saving state sooner after the completion of data communication, the power consumption of the mobile equipment 1A can be reduced. In this manner, it is possible to reduce the power consumption of the mobile equipment 1A more efficiently while reducing the influence on the data communication.

With the mobile equipment 1A (and the state-transition-timer setting system) of the present embodiment, the prediction information may be the past traffic amount that is the amount of traffic during a certain period of time in the past for the mobile equipment 1A. The timer determining unit 14A may determine the state transition timer to be a longer time than the predetermined set time when the amount of the past traffic acquired by the acquiring unit 13A is larger than the predetermined threshold, and may determine the state transition timer to be a shorter time than the predetermined set time when the amount of the past traffic acquired by the acquiring unit 13A is smaller than the predetermined threshold. With this configuration, based on the amount of the past traffic, the state transition timer can be dynamically determined and set. For example, when the past traffic amount is larger than the predetermined threshold, the amount of upcoming traffic of the mobile equipment 1A is predicted to be large, and accordingly by setting the state transition timer to be longer and thus maintaining the mobile equipment 1A to be in the communication state for a longer period of time after completion of data communication, time delay in data communication associated with additional state transition can be prevented at the time of resumption of data communication, whereby the connection time can be shortened. Furthermore, this can reduce the occurrence of traffic for transition between the base station 2 and the mobile equipment 1A, thereby reducing the load on the network. In addition, for example, when the past traffic amount is smaller than the predetermined threshold, the amount of upcoming traffic of the mobile equipment 1A can be predicted to be small, and accordingly by setting the state transition timer to be shorter for the mobile equipment 1A to transition into the power-saving state sooner after the completion of data communication, the power consumption of the mobile equipment 1A can be reduced. In this manner, it is possible to reduce the power consumption of the mobile equipment 1A more efficiently while reducing the influence on the data communication.

With the mobile equipment 1A (and the state-transition-timer setting system) of the present embodiment, the state transition timer may be a time (FD activation timer) from when data communication of the mobile equipment 1A is completed to when a transition request command to request transition into the power-saving state is transmitted to the base station 2, or may be a shortest transmission interval (T323 timer) at which the mobile equipment 1A can transmit the transition request command subsequently to when the mobile equipment 1A transmits the transition request command after completion of data communication of the mobile equipment 1A. By specifying the state transition timer in this manner, the time after which the state of the mobile equipment 1A is caused to transition from the communication state to the power-saving state can be controlled more accurately, whereby the power consumption of the mobile equipment 1A can be reduced more efficiently.

### [Second Embodiment]

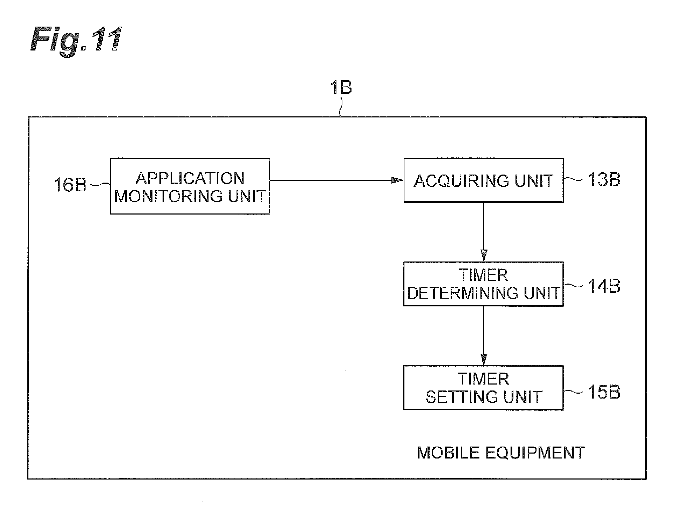

The following describes a mobile equipment 1B according to a second embodiment with reference to Figs. 11 to 13. Fig. 11 is a functional block diagram illustrating a configuration of the mobile equipment 1B according to the second embodiment. As depicted in Fig. 11, the mobile equipment 1B includes an application monitoring unit 16B, an acquiring unit 13B (acquiring means), a timer determining unit 14B (timer determining means), and a timer setting unit 15B (timer setting means). The acquiring unit 13B, the timer determining unit 14B, and the timer setting unit 15B are also components of the status-transition-timer setting system (not depicted). In other words, part of the respective functional blocks constituting the state-transition-timer setting system is included by the mobile equipment 1B, and the other part is included by another device (e.g., base station 2).

The following describes the respective functional blocks of the mobile equipment 1B (or the state-transition-timer setting system) depicted in Fig. 11.

The application monitoring unit 16B monitors applications that are running in the mobile equipment 1B to determine whether a certain application involving communication is running. Specific examples of the certain application involving communication include an application having a video chat function. The application monitoring unit 16B then creates activation information (prediction information) indicating whether the certain application involving communication is running.

The acquiring unit 13B acquires the activation information created by the application monitoring unit 16B. The acquiring unit 13B may acquire the activation information from an external device via a network.

The timer determining unit 14B determines the state transition timer to be a longer time than a predetermined set time when the activation information acquired by the acquiring unit 13B indicates that the application is running, and determines the state transition timer to be a shorter time than the predetermined set time when the activation information acquired by the acquiring unit 13B indicates that the application is not running.

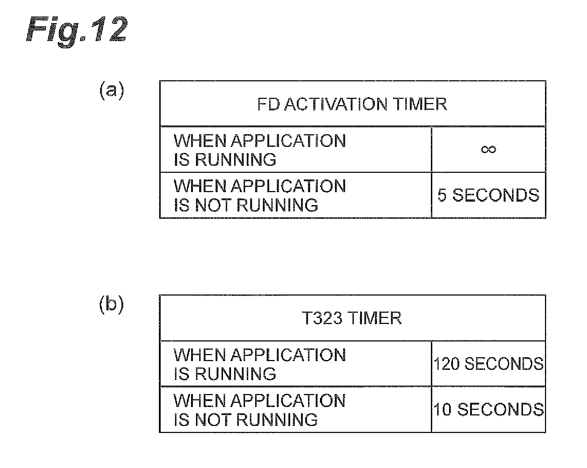

The following describes specific processes by which the timer determining unit 14B determines the state transition timer on the basis of the activation information with reference to Fig. 12. Fig. 12 includes table examples of state-transition-timer determination tables to which the timer determining unit 14B refers when determining the state transition timer. As depicted in Fig. 12, contents indicated by the activation information and times are associated with each other and stored in the state-transition-timer determination tables. Fig. 12A illustrates a state-transition-timer determination table when the state transition timer is the FD activation timer, and Fig. 12B illustrates a state-transition-timer determination table when the state transition timer is the T323 timer.

For example, assuming that the state transition timer is the FD activation timer, when the activation information acquired by the acquiring unit 13B indicates that the application is running, the timer determining unit 14B refers to the state-transition-timer determination table of Fig. 12A and determines the FD activation timer to be an infinite time (the maximum time that the mobile equipment 1 can set) that is a longer time than the predetermined set time (e.g., 10 seconds as default) (or determines not to activate the Fast Dormancy).

Alternatively, assuming that the state transition timer is the T323 timer, when the activation information acquired by the acquiring unit 13B indicates that the application is not running, the timer determining unit 14B refers to the state-transition-timer determination table of Fig. 12B and determines the T323 timer to be 10 seconds that is a shorter time than the predetermined set time (e.g., 60 seconds as default).

The timer setting unit 15B is similar to the timer setting unit 15A, and thus description thereof is omitted.

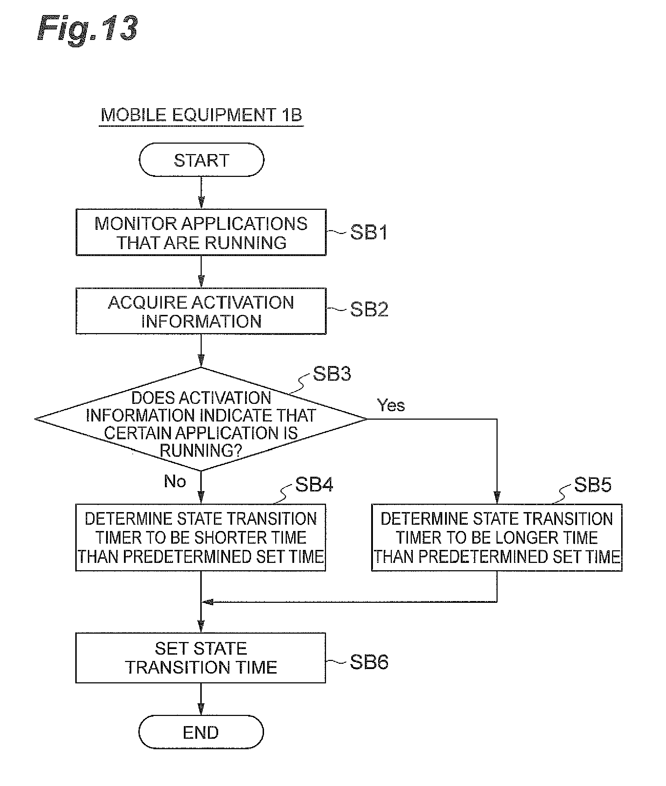

The following describes processes of a state-transition-timer setting method in the mobile equipment 1B (or the state-transition-timer setting system) according to the present embodiment with reference to Fig. 13.

To begin with, the application monitoring unit 16B monitors applications that are running to create activation information (step SB1). The acquiring unit 13B then acquires the activation information thus created (step SB2, acquiring step). Next, the timer determining unit 14B determines whether the activation information acquired indicates that a certain application involving communication is running (step SB3, timer determining step). If it is determined at step SB3 that the activation information does not indicate that the application is running, the timer determining unit 14B determines the state transition timer to be a shorter time than the predetermined set time (step SB4, timer determining step). If it is determined at step SB3 that the activation information indicates that the application is running, timer determining unit 14B determines the state transition timer to be a longer time than the predetermined set time (step SB5, timer determining step). Subsequently to step SB4 and step SB5, the timer setting unit 15B sets the state transition timer determined (step SB6, timer setting step). At step SB5, the mobile equipment 1B may determine not to activate the Fast Dormancy instead of determining the state transition timer to be the longer time than the predetermined set time.

The following describes functions and effects of the mobile equipment 1B (or the state-transition-timer setting system) configured as in the second embodiment.

With the mobile equipment 1B (and the state-transition-timer setting system) of the present embodiment, the prediction information may be activation information indicating whether a certain application involving communication is running in the mobile equipment 1B. The timer determining unit 14B may determine the state transition timer to be a longer time than a predetermined set time when the activation information acquired by the acquiring unit 13B indicates that the application is running, and may determine the state transition timer to be a shorter time than the predetermined set time when the activation information acquired by the acquiring unit 13B indicates that the application is not running. With this configuration, based on the activation information, the state transition timer can be dynamically determined and set. For example, when the activation information indicates that the application is running, the amount of upcoming traffic of the mobile equipment 1B can be predicted to be large, and accordingly by setting the state transition timer to be longer and thus maintaining the mobile equipment 1B to be in the communication state for a longer period of time after completion of data communication, time delay in data communication associated with additional state transition can be prevented at the time of resumption of data communication, whereby the connection time can be shortened. Furthermore, this can reduce the occurrence of traffic for transition between the base station 2 and the mobile equipment 1B, thereby reducing the load on the network. In addition, for example, when the activation information indicates that the application is not running, the amount of upcoming traffic of the mobile equipment 1B is predicted to be small, and accordingly by setting the state transition timer to be shorter for the mobile equipment 1B to transition into the power-saving state sooner after the completion of data communication, the power consumption of the mobile equipment 1B can be reduced. In this manner, it is possible to reduce the power consumption of the mobile equipment 1B more efficiently while reducing the influence on the data communication.

### [Third Embodiment]

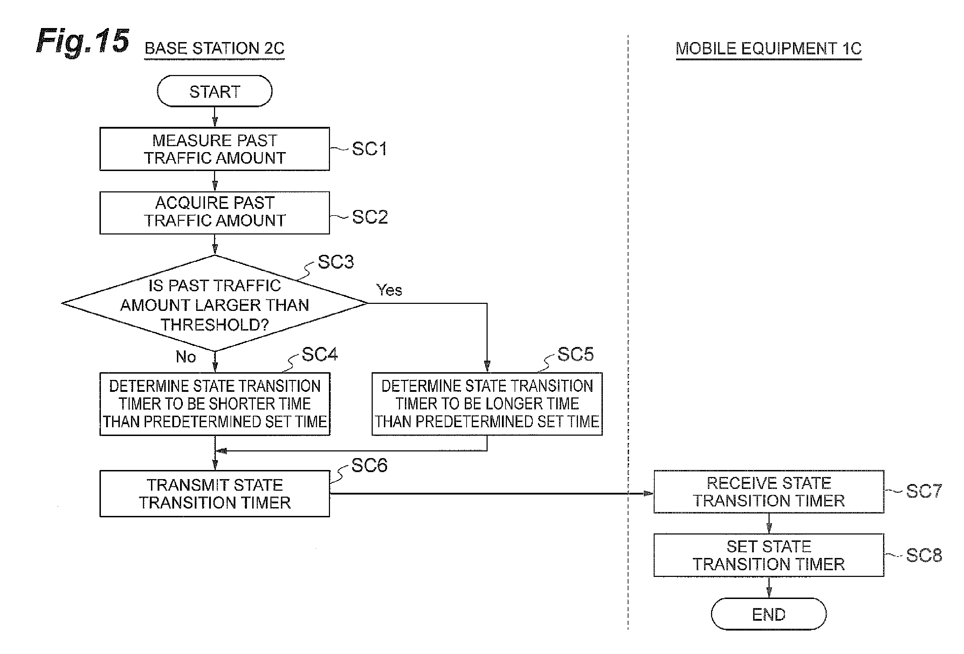

The following describes a mobile communication system 3C including a base station 2C and a mobile equipment 1C according to a third embodiment with reference to Figs. 14 and 15. Fig. 14 is a functional block diagram illustrating a configuration of the base station 2C and the mobile station 1C according to the third embodiment. As depicted in Fig. 14, the base station 2C includes a transmitting/receiving unit 20C, a past-traffic-amount storage unit 21C, a measuring unit 22C, an acquiring unit 23C (acquiring means), a timer determining unit 24C (timer determining means), and a transmitting unit 25C (transmitting means). The mobile equipment 1C includes a receiving unit 17C (receiving means) and a timer setting unit 15C (timer setting means). The acquiring unit 23C, the timer determining unit 24C, and the timer setting unit 15C are also components of the status-transition-timer setting system (not depicted). In other words, part of the respective functional blocks constituting the state-transition-timer setting system is included by the base station 2C, and the other part is included by the mobile equipment 1C.

The following describes the respective functional blocks of the base station 2C and the mobile equipment 1C (or the state-transition-timer setting system) depicted in Fig. 14.

The transmitting/receiving unit 20C of the base station 2C transmits and receives data between the base station 2C and the mobile station 1C. The past-traffic-amount storage unit 21C measures the amount of traffic (amount of data communication) transmitted and received by the transmitting/receiving unit 20C and stores the data in the auxiliary storage 205, for example.

The measuring unit 22C creates prediction information on the amount of upcoming traffic of the mobile equipment 1C. Specifically, the measuring unit 22C measures past traffic amount that is the amount of traffic in the mobile equipment 1C during a certain period in the past to create a measurement result (past traffic amount) on the basis of the amount of traffic of the mobile equipment 1C that is stored by the past-traffic-amount storage unit 21C. Examples of the past traffic amount measured by the measuring unit 22C are similar to those of the past traffic amount measured by the measuring unit 12A in the first embodiment.

The acquiring unit 23C acquires prediction information on the amount of upcoming traffic of the mobile equipment 1C. Specifically, the acquiring unit 23C acquires the past traffic amount measured by the measuring unit 22C. The acquiring unit 23C may acquire the past traffic amount (prediction information) from an external device via a network.

The timer determining unit 24C determines a state transition timer (an FD activation timer or a T323 timer) for a time after which the state of the mobile equipment 1C is caused to transition from a communication state to a power-saving state on the basis of the prediction information acquired by the acquiring unit 23C. Because the details of the timer determining unit 24C are similar to those of the timer determining unit 14A in the first embodiment, description thereof is omitted.

The transmitting unit 25C transmits the state transition timer determined by the timer determining unit 24C to the mobile equipment 1C.

The receiving unit 17C of the mobile equipment 1C receives the state transition timer from the base station 2C. Specifically, the mobile equipment 1C receives the state transition timer transmitted by the transmitting unit 25C of the base station 2C.

The timer setting unit 15C sets (reflects, updates) the state transition timer received by the receiving unit 17C for the mobile equipment 1C. The status transition timer is set by the timer setting unit 15C, so that the status transition timer takes effect in the mobile equipment 1C. When the status transition timer takes effect in the mobile equipment 1C, the state of the mobile equipment 1C transitions form the communication state to the power-saving state on the basis of the state transition timer.

The following describes processes of the state-transition-timer setting method in the mobile communication system 3C (or the state-transition-timer setting system) according to the present embodiment with reference to Fig. 15.

To begin with, the measuring unit 22C of the base station 2C measures the past traffic amount (step SC1), and the acquiring unit 23C acquires the past traffic amount thus measured (step SC2). Next, the timer determining unit 24C determines whether the past traffic amount is larger than the predetermined threshold (step SC3). If the past traffic amount is not determined to be larger at step SC3, the timer determining unit 24C determines the state transition timer to be a shorter time than the predetermined set time (step SC4). If the past traffic amount is determined to be larger at step SC3, the timer determining unit 24C determines the state transition timer to be a longer time than the predetermined set time (step SC5). Subsequently to step SC4 and step SC5, the transmitting unit 25C transmits the state transition timer thus determined to the mobile equipment 1C (step SC6).

Next, the receiving unit 17C of the mobile equipment 1C receives the state transition timer (step SC7), and the timer setting unit 15C sets the state transition timer thus received (step SC8).

The following describes functions and effects of the mobile communication system 3C (or the state-transition-timer setting system) configured as in the third embodiment.

With the mobile communication system 3C (or the state-transition-timer setting system) according to the present embodiment, the past traffic amount is stored and the state transition timer is determined on the side of the base station 2C. As is apparent from comparison between the mobile equipment 1A of the first embodiment and the mobile equipment 1C of the present embodiment, the configuration of the mobile equipment 1C is simplified, and the processing load of storing and measuring the past traffic amount and determining the state transition timer, for example, and the storage capacity required therefor are reduced. This can more efficiently reduce the power consumption of the mobile equipment 1C.

In the mobile equipment 1 configured as in the first embodiment to the third embodiment, a user may be notified of the measured amount of traffic, the communication status of applications, and the amount of consumed current, for example, displayed with icons, for example.

### Reference Signs List

1, 1A, 1B, 1C... mobile equipment, 2, 2C... base station, 3... mobile communication system, 10A... transmitting/receiving unit, 11A... past-traffic-amount storage unit, 12A... measuring unit, 13A, 13B... acquiring unit, 14A, 14B... timer determining unit, 15A, 15B, 15C... timer setting unit, 16B... application monitoring unit, 17C... receiving unit, 20C... transmitting/receiving unit, 21C... past-traffic-amount storage unit, 22C... measuring unit, 23C... acquiring unit, 24C... timer determining unit, 25C... transmitting unit

## Claims

1. A state-transition-timer setting system, comprising:
acquiring means for acquiring prediction information on the amount of traffic of a mobile equipment;
timer determining means for determining a state transition timer for a time after which a state of the mobile equipment is caused to transition from a communication state to a power-saving state, based on the prediction information acquired by the acquiring means; and
timer setting means for setting the state transition timer determined by the timer determining means for the mobile equipment.

2. The state-transition-timer setting system according to claim 1, wherein
the prediction information is past traffic amount that is the amount of traffic during a certain period of time in the past for the mobile equipment, and
the timer determining means determines the state transition timer to be a longer time than a predetermined set time when the past traffic amount acquired by the acquiring means is larger than a predetermined threshold, and determines the state transition timer to be a shorter time than the predetermined set time when the past traffic amount acquired by the acquiring means is smaller than the predetermined threshold.

3. The state-transition-timer setting system according to claim 1, wherein
the prediction information, is activation information indicating whether a certain application involving communication is running in the mobile equipment, and
the timer determining means determines the state transition timer to be a longer time than a predetermined set time when the activation information acquired by the acquiring means indicates that the application is running, and determines the state transition timer to be a shorter time than the predetermined set time when the activation information acquired by the acquiring means indicates that the application is not running.

4. The state-transition-timer setting system according to any one of claims 1 to 3, wherein
the state transition timer is a time from when data communication of the mobile equipment is completed to when a transition request command to request transition into the power-saving state is transmitted to the base station, or is a shortest transmission interval at which the mobile equipment is capable of transmitting the transition request command subsequently to when the mobile equipment transmits the transition request command after completion of data communication of the mobile equipment.

5. A mobile equipment, comprising:
acquiring means for acquiring prediction information on the amount of traffic of the mobile equipment;
timer determining means for determining a state transition timer for a time after which a state of the mobile equipment is caused to transition from a communication state to a power-saving state, based on the prediction information acquired by the acquiring means; and
timer setting means for setting the state transition timer determined by the timer determining means for the mobile equipment.

6. A mobile communication system, comprising:
a base station; and
a mobile equipment, wherein
the base station includes:
acquiring means for acquiring prediction information on the amount of traffic of the mobile equipment;
timer determining means for determining a state transition timer for a time after which a state of the mobile equipment is caused to transition from a communication state to a power-saving state, based on the prediction information acquired by the acquiring means; and
transmitting means for transmitting the state transition timer determined by the timer determining means to the mobile equipment, and
the mobile equipment includes:
receiving means for receiving the state transition timer from the base station; and
timer setting means for setting the state transition timer received by the receiving means for the mobile equipment.

7. A state-transition-timer setting method that is performed by a state-transition-timer setting system, the state-transition-timer setting method comprising:
an acquiring step of, by acquiring means of the state-transition-timer setting system, acquiring prediction information on the amount of traffic of a mobile equipment;
a timer determining step of, by timer determining means of the state-transition-timer setting system, determining a state transition timer for a time after which a state of the mobile equipment is caused to transition from a communication state to a power-saving state, based on the prediction information acquired at the acquiring step; and
a timer setting step of, by timer setting means of the state-transition-timer setting system, setting the state transition timer determined at the timer determining step for the mobile equipment.
